# EUROPEAN PATENT SPECIFICATION

(11) **EP 0 354 642 B1**
(45) Date of publication and mention of the grant of the patent: **03.11.1993**
(21) Application number: 89305004.7
(22) Date of filing: 17.05.1989
(51) Int. Cl.: H02K 11/00, H02K 13/10

(54) **An armature drive shaft assembly**
Eine Ankerantriebswellen-Einheit
Un ensemble d'arbre d'entraînement d'induit

(30) Priority: 06.08.1988 GB 8818721
(43) Date of publication of application: 14.02.1990
(73) Proprietor: AUTOMOTIVE COMPONENTS DUNSTABLE LIMITED, Dunstable Bedfordshire LU6 1UZ (GB)
(72) Inventor: Bates, Trevor, Dunstable Bedfordshire LU6 3NF (GB)
(74) Representative: Britter, Keith Palmer

(56) References cited:
- DE-A- 1 929 984
- FR-A- 1 053 236
- GB-A- 2 087 661
- GB-A- 2 183 933
- US-A- 3 487 248

## Description

This invention relates to an armature drive shaft assembly for an electric motor, and has particular application for an electric motor for use on a motor vehicle. Such electric motors are usually permanent magnet motors and include those used for the windscreen wipers, radiator cooling fan, air blower fan, window lift motors etc.

It is well known that radio frequency (RF) noise voltages are generated by electric motors due the action of the commutator generating sparking at the interface of the commutator and the brushes. Sparking is generated by the action of the commutator switching successive armature windings to the supply voltage to cause rotation of the armature. This make and break of the armature supply voltage generates a rapid increase and then decrease in the magnetic field associated with the armature. Each time this magnetic field collapses, a high voltage is generated in the reverse direction to the supply voltage. This causes a high, substantially instantaneous, current to flow in the supply voltage circuit, generating a spark between the commutator and the brushes. This action has two effects; firstly it generates an RF current in the external supply voltage circuit, causing radio interference; and secondly it generates a high voltage transient as each commutator segment switches an armature winding from the supply voltage circuit. This problem is particularly prevalent when the electric motor is switched off, when a high back EMF or reverse voltage is generated.

Previously known arrangements for suppressing or reducing these RF currents rely on the use of components being placed across the brushes external to the armature drive shaft assembly. These known arrangements have been expensive, and are not always effective.

It is an object of this invention to substantially reduce the above mentioned two effects, and the disadvantages associated therewith, in a cost effective way.

Patent applications GB-A-2 087 661, US-A-3 487 248 and DE-A-1 929 984 each discloses arrangements for reducing electrical noise and brush sparking in commutated electric motors, wherein the segments of the commutators are connected together by electrically resistive coatings.

It is known from GB Patent No. 1337343 to provide a commutator having voltage dependent resistor characteristics. This requires the use of a special commutator, and hence changes to the basic design. Further, the use of voltage dependent resistance characteristics does not efficiently suppress or reduce RF currents.

It is a further object of the present invention to overcome the above disadvantages.

To this end, an armature drive shaft assembly in accordance with the present invention comprises a drive shaft; an armature comprising armature windings wound on the drive shaft; a commutator positioned on the drive shaft and comprising commutator segments which are connected to the armature windings; and a resistive coating connecting the commutator segments to provide a linear resistive path therebetween; wherein the drive shaft is connectable to electrical ground, and wherein the resistive coating connects the commutator segments to the drive shaft.

It has been shown by tests that a simple and effective way of reducing the currents generated by the RF voltages is to provide an alternative path for these RF currents within the casing of the electric motor, thereby containing the RF currents within the casing. The present invention not only reduces the RF currents, but also provides an arrangement whereby the RF currents can be contained within the casing of the electric motor, by effectively placing a linear resistive path across each armature winding, and to the casing by way of the drive shaft. The present invention has the additional advantage of keeping the back EMF voltages below 150 volts at switch off, which significantly reduces electrical erosion at the interface of the brushes and the commutator, thereby extending the life of the brushes and the electric motor. Further still, the present invention can be used on standard electric motors without the use of a special commutator. The resistive coating provides a linear resistive path between the commutator segments which is not voltage dependent, and which is far more efficient in reducing RF currents.

Preferably, the resistive coating coats each circumferential end of the commutator to directly connect each end of each commutator segment to the drive shaft, and to directly connect each end of each armature winding to the drive shaft. Alternatively, the resistive coating is only on one circumferential end of the commutator, and, in this case, is preferably applied prior to winding the armature.

The resistive coating preferably provides a linear resistance between each commutator segment and the drive shaft, if required, in the range 25 to 200 ohms, although the present invention is not limited to these values.

Preferably, the resistive coating has been applied by spraying.

The present invention also includes an electric motor having an armature drive shaft assembly as herein defined.

The present invention will now be described, by way of example, with reference to the accompanying drawings, in which:-
Figure 1 is a side view of a known armature drive shaft assembly;
Figure 2 is a diagrammatic representation of the electric circuit of the armature drive shaft assembly shown in Figure 1;
Figure 3 is a side view of an armature drive shaft assembly in accordance with the present invention; and
Figure 4 is a diagrammatic representation of the electric circuit of the armature drive shaft assembly shown in Figure 3.

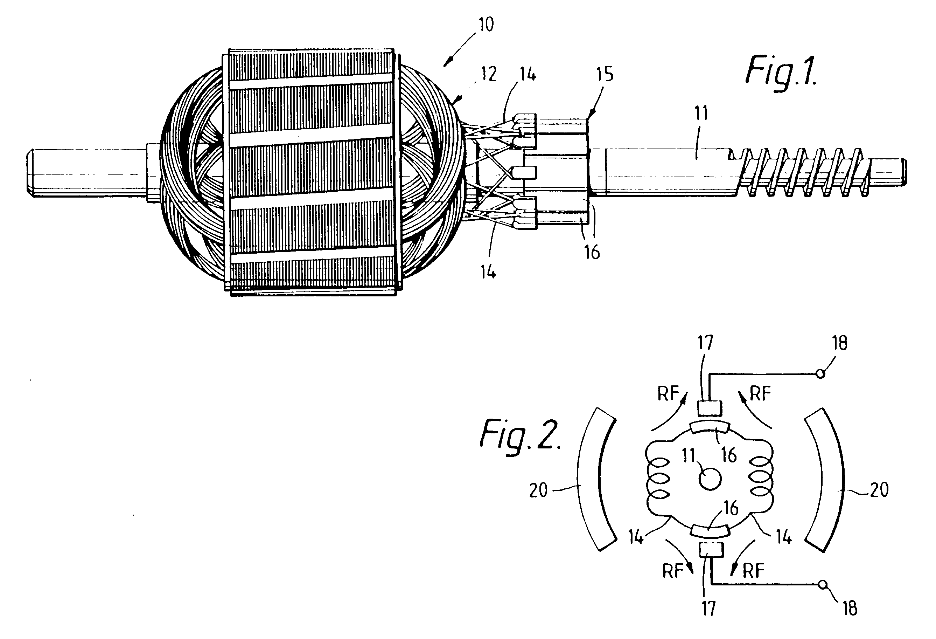

Referring to Figure 1, the known prior art arrangement of armature drive shaft assembly 10 comprises a drive shaft 11, an armature 12 comprising armature windings 14, and a commutator 15 comprising commutator segments 16 connected individually to an armature winding.

The equivalent electric circuit shown in Figure 2 includes the drive shaft 11, and a pair of commutator segments 16 connected to a pair of armature windings 14. Also shown are a pair of brushes 17 associated with the commutator, which are connected via terminals 18 to a supply voltage circuit (not shown), and a pair of permanent magnets 20. Although only one pair of commutator segments and armature windings is shown, it will be appreciated that the arrangement is the same for all of the commutator segments and armature windings.

In this known arrangement, sparking generated between the commutator segments 16 and the brushes 17 generates RF voltages having a current path indicated by the arrows labelled RF.

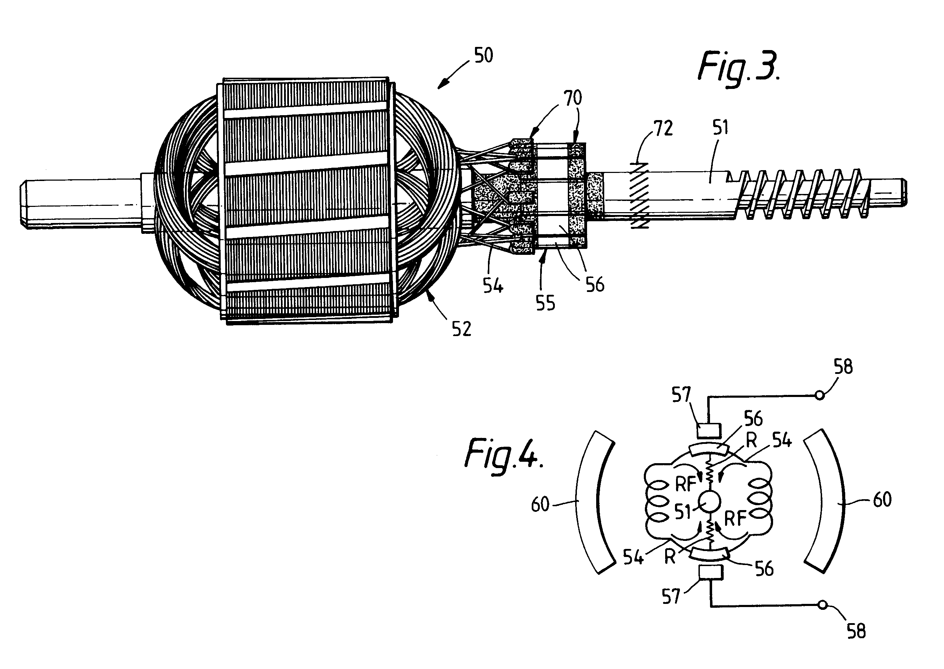

The present invention, as indicated by the embodiment shown in Figure 3, is an armature drive shaft assembly 50 comprising a drive shaft 51, an armature 52 comprising armature windings 54, and a commutator 55 comprising commutator segments 56. A linear resistive path between the armature windings 54, and between the commutator segments 56 and the drive shaft 51, is provided by a resistive coating 70. The drive shaft 51 is connected to the casing (not shown) of the electric motor, and hence to ground, by way of bearing surfaces 72 for the drive shaft.

As can be seen from the equivalent electric circuit shown in Figure 4, which also shows a pair of brushes 57, terminals 58 to a supply voltage circuit (not shown), and permanent magnets 60, the resistive coating provides a resistive path R between the commutator segments 56 and the drive shaft 51. As a consequence, the RF current path is now through the drive shaft 51 and the casing to ground, and not through the supply voltage circuit.

The use of a resistive coating 70 is obviously far more practical than discrete resistors placed within the assembly, as discrete resistors would cause problems with balancing of the assembly at high speeds. The advantage of the present invention is that a resistor arrangement can be provided within the assembly without affecting the balance of the assembly, and that a standard assembly can be easily modified to accommodate the present invention. This has been shown to reduce sparking at the commutator 55 by reducing the size of the RF currents generated at this source and also containing most of the RF current within the assembly itself. The present invention has been found to have the additional advantage of reducing the back EMF generated when the electric motor is switched off by providing a resistive path to ground for the generated currents.

The resistive coating 70 can be applied by spraying over the commutator 55 and extending to the drive shaft 51 either before or after the armature 52 is wound. The commutator 55 is then skimmed and undercut to expose an area for contact by the brushes 57. Suitable alternative methods of applying the resistive coating could of course be used.

Suitable materials for the resistive coating 70 include a nickle coating of approximately 0.7 ohms/sq. A graphite coating of approximately 20 ohms/sq. also gives acceptable results.

The preferred range for linear resistance R between each commutator segment 56 and the drive shaft 51 for an electric motor for a windscreen wiper of a motor vehicle is 25 to 200 ohms. This provides a compromise between adequate suppression of the RF voltage generated noise without greatly increasing the supply current. This range may be adjusted to suit other applications of electric motors.

An improvement in suppression of 10 dB has been found to be typical with a resistive coating having a resistance of 25 ohms. Further, the switch-off transient was found to be reduced below 150 volts, thereby reducing the electrical erosion at the commutator/brush interface, with a consequent increase in brush and motor life.

## Claims

1. An armature drive shaft assembly (50) for an electric motor comprising a drive shaft (51); an armature (52) comprising armature windings (54) wound on the drive shaft; a commutator (55) positioned on the drive shaft and comprising commutator segments (56) which are connected to the armature windings; a resistive coating (70) connecting the commutator segments (56) to provide a linear resistive path (R) therebetween; characterised in that the drive shaft (51) is connectable (72) to electrical ground, and in that the resistive coating (70) connects the commutator segments (56) to the drive shaft.

2. An armature drive shaft assembly as claimed in claim 1, wherein the resistive coating (70) coats each circumferential end of the commutator (55) to directly connect each end of each commutator segment (56) to the drive shaft (51), and to directly connect each end of each armature winding (54) to the drive shaft.

3. An armature drive shaft assembly as claimed in claim 1, wherein the resistive coating (70) is only on one circumferential end of the commutator (55), and wherein the resistive coating has been applied prior to winding the armature (52).

4. An armature drive shaft assembly as claimed in any one of claims 1 to 3, wherein the resistive coating (70) provides a linear resistance (R) between each commutator segment (56) and the drive shaft (51) in the range 25 to 200 ohms.

5. An armature drive shaft assembly as claimed in any one of claims 1 to 4, wherein the resistive coating (70) has been applied by spraying.

6. An electric motor comprising an armature drive shaft assembly as claimed in any one of the preceding claims.

## Patentansprüche

1. Eine Ankerantriebswellen-Anordnung (50) für einen Elektromotor, mit einer Antriebswelle (51); einem Anker (52) mit auf die Antriebswelle gewickelten Ankerwindungen (54); einem Kommutator (55), der auf der Antriebswelle positioniert ist und Kommutatorsegmente (56) aufweist, die mit den Ankerwindungen verbunden sind; einem Widerstandsüberzug (70), der die Kommutatorsegmente (56) verbindet, um dazwischen einen Linear-Widerstands-Pfad (R) zu schaffen; dadurch gekennzeichnet, daß die Antriebswelle (51) an die elektrische Erde verbindbar ist und daß der Widerstandsüberzug (70) die Kommutatorsegmente (56) mit der Antriebswelle verbindet.

2. Eine Ankerantriebswellen-Anordnung wie beansprucht in Anspruch 1, worin der Widerstandsüberzug (70) jedes Umfangsende des Kommutators (55) überzieht, um jedes Ende jedes Kommutatorsegments (56) direkt mit der Antriebswelle (51) zu verbinden und um jedes Ende jeder Ankerwindung (54) direkt mit der Antriebswelle zu verbinden.

3. Eine Ankerantriebswellen-Anordnung wie beansprucht in Anspruch 1, worin der Widerstandsüberzug (70) sich nur auf einem Umfangsende des Kommutators (55) befindet und worin der Widerstandsüberzug vor dem Wickeln des Ankers (52) aufgebracht wurde.

4. Eine Ankerantriebswellen-Anordnung wie beansprucht in irgendeinem der Ansprüche 1 bis 3, worin der Widerstandsüberzug (70) einen linearen Widerstand (R) im Bereich 25 bis 200 Ohm zwischen jedem Kommutatorsegment (56) und der Antriebswelle (51) schafft.

5. Eine Ankerantriebswellen-Anordnung wie beansprucht in irgendeinem der Ansprüche 1 bis 4, worin der Widerstandsüberzug (70) durch Sprühen aufgebracht wurde.

6. Ein Elektromotor mit einer Ankerantriebswellen-Anordnung wie beansprucht in irgendeinem der vorhergehenden Ansprüche.

## Revendications

1. Ensemble (50) d'arbre d'induit et d'entraînement pour un moteur électrique comprenant un arbre d'entraînement (51); un induit (52) comprenant des enroulements d'induit (54) enroulés sur l'arbre d'entraînement; un commutateur (55) positionné sur l'arbre d'entraînement et comprenant des segments (56) de commutateur reliés aux enroulements d'induit; et un revêtement de résistance (70), reliant les segments (56) de commutateur les uns aux autres de manière à créer entre eux un chemin (R) de résistance;
caractérisé en ce que l'arbre d'entraînement (51) peut être raccordé (72) à la masse électrique, et en ce que le revêtement de résistance (70) relie les segments (56) du commutateur à l'arbre d'entraînement.

2. Ensemble d'arbre d'induit et d'entraînement selon la revendication 1, dans lequel le revêtement de résistance (70) recouvre chaque extrémité circonférentielle du commutateur (55) de manière à relier de façon directe chaque extrémité de chaque segment (56) du commutateur à l'arbre d'entraînement (51), et à relier de façon directe chaque extrémité de chaque enroulement d'induit (54) à l'arbre d'entraînement.

3. Ensemble d'arbre d'induit et d'entraînement selon la revendication 1, dans lequel le revêtement de résistance (70) est disposé uniquement sur une extrémité circonférentielle du commutateur (55), et dans lequel le revêtement de résistance est appliqué avant le bobinage de l'induit (52).

4. Ensemble d'arbre d'induit et d'entraînement selon l'une quelconque des revendications 1 à 3, dans lequel le revêtement de résistance (70) fournit un chemin (R) à résistance linéaire entre chaque segment (56) du commutateur et l'arbre d'entraînement (51), se situant dans une plage de 25 à 200 Ohms.

5. Ensemble d'arbre d'induit et d'entraînement selon l'une quelconque des revendications 1 à 4, dans lequel le revêtement de résistance (70) est appliqué par pulvérisation.

6. Moteur électrique comprenant un ensemble d'arbre d'induit et d'entraînement selon l'une quelconque des revendications précédentes.
